(19) Europäisches Patentamt
European Patent Office
Office européen des brevets

(11) EP 0 943 631 B1

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
***C08F 10/06*** *(2006.01)* ***C08L 23/10*** *(2006.01)*

(21) Anmeldenummer: **99104857.0**

(22) Anmeldetag: **11.03.1999**

(54) **Polymere des Propens**

Propylene polymers

Polymères à base de propylène

(84) Benannte Vertragsstaaten:
**AT BE DE ES FI FR GB IT NL SE**

(30) Priorität: **20.03.1998 DE 19812229**

(43) Veröffentlichungstag der Anmeldung:
**22.09.1999 Patentblatt 1999/38**

(73) Patentinhaber: **Basell Polyolefine GmbH**
**50389 Wesseling (DE)**

(72) Erfinder:
- **Fischer, David, Dr.**
  **67725 Breunigweiler (DE)**
- **Grasmeder, John, Russell, Dr.**
  **67246 Dirmstein (DE)**
- **Gregorius, Heike, Dr.**
  **56288 Bubach (DE)**
- **Seelert, Stefan, Dr.**
  **67227 Frankenthal (DE)**
- **Langhauser, Franz, Dr.**
  **67152 Ruppertsberg (DE)**
- **Micklitz, Wolfgang, Dr.**
  **67434 Neustadt (DE)**
- **Rümpler, Klaus-Dieter, Dr.**
  **67157 Wachenheim (DE)**

(56) Entgegenhaltungen:
**EP-A- 0 643 100**
**US-A- 3 268 627**
**US-A- 5 516 848**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 943 631 B1

Printed by Jouve, 75001 PARIS (FR)

## Beschreibung

Die vorliegende Erfindung betrifft Polymere des Propens, bestehend aus 50 bis 99,9 Gew.-% eines isotaktischen Propencopolymeren (A') und aus 0,1 bis 50 Gew.-% eines Propenhomopolymeren oder eines Propencopolymeren (B'), wobei

a) das Propencopolymere (A') aus 80 bis 99,5 mol-% Propen und aus 0,5 bis 20 mol-% Ethen und/oder einem $C_4$-$C_{12}$-1-Olefin besteht, mindestens 80 % aller Propen-Diaden isotaktische meso-Diaden sind, das Propencopolymere (A') ferner bei 20°C xylollösliche Anteile in einer solchen Menge ($X_L$) aufweist, daß diese die Ungleichung (1)

$$(X_L) < 542\ 400 \exp(-0{,}1\ T_M) + 0{,}5 \qquad (1)$$

erfüllt, der Zug E-Modul (E) der Propencopolymere (A') in MPa, bestimmt nach ISO 527, der Ungleichung (2)

$$(E) > 1{,}9 \times 10^{-11}\ (T_M)^{6.34} + 180\ \text{MPa} \qquad (2)$$

entspricht, wobei in beiden Ungleichungen (1) und (2) $T_M$ für den Schmelzpunkt in °C steht und wobei

b) das Propenhomopolymere oder das Propencopolymere (B') aus 80 bis 100 mol-% Propen und aus 0 bis 20 mol-% Ethen und/oder aus einem $C_4$-$C_{12}$-1-Olefin besteht, mindestens 55 % aller regioregulären Propen-Diaden als isotaktische meso-Diaden vorliegen, bei der DSC-Messung von (B') eine Schmelzenthalpie $\Delta H_m$ von weniger als 50 J/g beobachtet wird und keine kristallinen $E_x$-Sequenzen nachweisbar sind.

Weiterhin betrifft die vorliegende Erfindung ein Verfahren zur Herstellung von Polymeren des Propens, deren Verwendung zur Herstellung von Folien, Fasern und Formkörpern sowie die hierbei erhältlichen Folien, Fasern und Formkörper.

Mit Hilfe von Metallocen-Katalysatorsystemen hergestellte statistische Propencopolymere mit Ethen oder mit einem höheren 1-Olefin als Comonomere eignen sich gut für zahlreiche Anwendungsbereiche der Kunststofftechnik (EP-A 668 157, DE-A 19 533 337). Dies gilt auch für mehrphasige Propencopolymere, wie in der EP-A 643 084 beschrieben, die auch aus mehreren verschiedenen Propencopolymeren bestehen können und u.a. zur Herstellung von Folien, Fasern oder Formkörpern eingesetzt werden.

EP-A 643 100 beschreibt kälteschlagzähe Zusammensetzungen, die zwei unterschiedliche Homopolymerisate des Propylens enthalten. solche Mischungen liegen in der Regel heterophasig vor.

US-A 5,516,848 beschreibt Mischungen aus amorphem Polypropylen und isotaktischem Polypropylen, die elastomere Eigenschaften aufweisen.

Statistische Propencopolymere wendet man u.a. im Spritzguß, insbesondere im Dünnwandspritzguß an, beispielsweise bei der Herstellung von transparenten Verpackungsbehältern. Hierbei wird ebenso auf hohe Steifigkeit und Transparenz des Materials Wert gelegt, wie auf ein Mindestmaß an Schlagzähigkeit, und damit Bruchsicherheit der hergestellten Formkörper. Im Verpackungsbereich, insbesondere wenn Lebensmittel verpackt werden sollen, oder für medizinische Anwendungen wie Einwegspritzen sind darüberhinaus oft auch niedrige extrahierbare Anteile gefordert.

Mit Metallocen-Katalysatoren hergestellte statistische Propencopolymere zeichnen sich, bei vergleichbaren Schmelzpunkten, gegenüber den bereits bekannten, mit Ziegler-Natta-Katalysatoren hergestellten, Propencopolymeren durch höhere Steifigkeit, bessere Transparenz und sehr niedrige extrahierbare Anteile aus [M.-J. Brekner: "Metallocene Based Isotactic Polypropylene For Selected Applications", Proc. Metallocens '96, S. 155f, Düsseldorf, 06. bis 07.03.1996; J.J. McAlpin: "Enhanced Performance for Exxpol™ Propylene Polymers in Target Applications", Proc. SPO '95, S. 125f, Houston, 20. bis 22.09.1995]. Allerdings besitzen sie eine deutlich geringere Schlagzähigkeit, die zudem bereits bei 0°C fast vollständig einbricht. Gerade im Bereich transparenter Lebensmittel-Verpackungen, wo auch bei Kühlschranktemperaturen eine möglichst hohe Bruchsicherheit gefordert ist, sind daher mit Metallocen-Katalysatoren hergestellte statistische Propencopolymere ihren konventionellen Vorläufern unterlegen.

Aufgabe der vorliegenden Erfindung war es daher, den genannten Nachteilen abzuhelfen und Polymere des Propens zu Verfügung zu stellen, die gegenüber den bisher bekannten statistischen Propencopolymeren, die mit Hilfe von Metallocen-Katalysatorsystemen erhalten werden, ein verbessertes Steifigkeits-SchlagzähigkeitsVerhältnis insbesondere auch bei tieferen Temperaturen aufweisen und darüber hinaus über eine hohe Transparenz und nur geringe extrahierbare Anteile verfügen.

Demgemäß wurden die eingangs definierten Polymere des Propens gefunden.

Weiterhin wurde ein Verfahren zur Herstellung der erfindungsgemäßen Polymere des Propens sowie deren Verwendung zur Herstellung von Folien, Fasern und Formkörper gefunden. Die vorliegende Erfindung erstreckt sich ferner auch auf Folien, Fasern und Formkörper aus den erfindungsgemäßen Polymeren des Propens

Die erfindungsgemäßen Polymere des Propens bestehen aus 50 bis 99,9 Gew.-%, vorzugsweise aus 70 bis 99,5 Gew.-% und insbesondere aus 85 bis 99 Gew.-% eines isotaktischen Propencopolymeren (A') und aus 0,1 bis 50 Gew.-%, vorzugsweise aus 0,5 bis 30 Gew.-% und insbesondere aus 1 bis 15 Gew.-% eines Propenhomopolymeren oder eines Propencopolymeren (B'). Die Summe der Gew.-% ergibt dabei stets 100. Das Propenhomopolymere und das Propencopolymere werden nachfolgend auch gemeinsam oder getrennt als Komponente (B') bezeichnet.

Das Propencopolymere (A') enthält dabei 80 bis 99,5 mol-%, vorzugsweise 85 bis 99,5 mol-% und insbesondere 90 bis 99,5 mol-% Propen und 0,5 bis 20 mol-%, vorzugsweise 0,5 bis 15 mol-% und insbesondere 0,5 bis 10 mol-% Ethen und/oder ein $C_4$-$C_{12}$-1-Olefin. Die Summe der mol-% ergibt dabei stets 100.

Unter der Bezeichnung $C_4$-$C_{12}$-1-Olefine sollen vor allem But-1-en, Pent-1-en, 4-Methyl-pent-1-en, Hex-1-en, Hept-1-en oder Oct-1-en verstanden werden, wobei But-1-en, Pent-1-en und Hex-1-en besonders bevorzugt eingesetzt werden.

Die in den erfindungsgemäßen Polymeren des Propens vorliegenden Propencopolymere (A') sind ferner dadurch charakterisiert, daß mindestens 80 %, insbesondere mindestens 90 % aller Propen-Diaden, d.h. der Sequenzen zweier direkt aufeinander folgender Propeneinheiten, isotaktische meso-Diaden sind. Unter isotaktischen meso-Diaden versteht man zwei direkt aufeinander folgende Propeneinheiten mit gleicher Konfiguration des Methin-Kohlenstoffs (H.L.Frisch et al., J.Chem. Physics., 1966, 45, S. 1565)

Das Propencopolymere (A') weist außerdem bei 20°C xylollösliche Anteile in einer solchen Menge ($X_L$) auf, daß diese der Ungleichung (1)

$$(X_L) < 542\,400 \exp(-0{,}1\ T_M) + 0{,}5 \qquad (1)$$

erfüllt, wobei $T_M$ für den mittels DSC-Messung bestimmten Schmelzpunkt in °C steht.

Weiterhin besitzt das Propencopolymere (A') einen solchen Zug E-Modul (E) in MPa, bestimmt nach ISO 527, daß dieser der Ungleichung (2)

$$(E) > 1{,}9 \times 10^{-11}\ (TM)^{6.34} + 180\ \text{MPa} \qquad (2)$$

gehorcht, wobei $T_M$ hierbei ebenfalls der mittels DSC-Messung ermittelte Schmelzpunkt bedeutet.

Die Komponente (B'), also das Propenhomopolymere oder das Propencopolymere (B') enthält 80 bis 100 mol-%, insbesondere 85 bis 100 mol-% Propen und 0 bis 20 mol-%, insbesondere 0 bis 15 mol-% Ethen und/oder ein $C_4$-$C_{12}$-1-Olefin, wobei die Summe der mol-% stets 100 ergibt.

Unter der Bezeichnung $C_4$-$C_{12}$-1-Olefine sollen dabei die gleichen Comonomere verstanden werden, wie sie bei den Propencopolymeren (A') eingesetzt werden.

Die Komponente (B') kann also entweder ein Propylenhomopolymer oder aber ein Propencopolymer sein, wobei dieses dann aus 80 bis 99,99 mol-%, insbesondere aus 85 bis 99,5 mol-% Propen und aus 0,01 bis 20 mol-%, insbesondere aus 0,5 bis 15 mol-% Ethen und/oder aus einem $C_4$-$C_{12}$-1-Olefin besteht. Die Summe der mol-% ergibt dabei wiederum 100.

Weiterhin sind in der Komponente (B') mindestens 55 %, insbesondere mindestens 60 % und bevorzugt mindestens 80 % aller regioregulären Propen-Diaden, d.h. der Sequenzen zweier direkt aufeinander folgenden Kopf-Schwanz verknüpften, Propen-Einheiten als isotaktische meso-Diaden vorhanden.

Darüber hinaus sind die als Komponente (B') verwendeten Propenhomopolymere oder Propencopolymere auch durch eine mittels DSC-Messung ermittelte Schmelzenthalpie $\Delta H_M$ von weniger als 50 J/g, insbesondere von weniger als 40 J/g charakterisiert. Sie weisen ferner keine kristallinen $E_x$-Sequenzen auf, worunter man kristallisationsfähige Sequenzen aus mehreren direkt aufeinanderfolgenden Etheneinheiten versteht.

Bevorzugte Propenhomopolymere oder Propencopolymere (B') verfügen über einen Anteil regioirregulärer '1-3'-insertierter Propeneinheiten von mindestens 4 %, insbesondere von mindestens 6 %, bezogen auf alle Propeneinheiten. Bei der '1-3'-Insertion von Propeneinheiten handelt es sich um den linearen Einbau von Propen in die Polymerhauptkette als Trimethylensequenz. Die Bestimmung der '1-3'-Insertion erfolgt dabei mittels $^{13}C$-NMR-Spektroskopie (Grassi et al., Macromolecules 21, 1988, S.617).

Weiterhin werden bevorzugt solche Propenhomopolymere oder Propencopolymere als Komponente (B') eingesetzt, die eine Glasübergangstemperatur (Tg), ermittelt durch DSC-Messung, von weniger als -10°C, insbesondere von weniger als -15°C, aufweisen.

Bevorzugte Polymere des Propens aus dem Propylencopolymer (A') und Komponente (B') weisen vorzugsweise einen solchen Zug-E-Modul (E) in MPa, bestimmt nach ISO 527 auf, welcher der Ungleichung (2')

$$(E) > 0{,}02093\,(X)^2 - 8{,}762\,(X) + 1780\ \text{MPa} \qquad (2')$$

gehorcht, wobei X für die Charpy-Schlagzähigkeit nach ISO 179-2/1 eU, bei 0°C steht. Der Zug-E-Modul (E) sollte bei besonders bevorzugten Polymeren des Propens mehr als 1150 MPa betragen.

Derartige Polymere des Propens weisen ferner bei 20°C xylollösliche Anteile von weniger als 5 Gew.-% auf. Sie enthalten vorzugsweise insgesamt 80 bis 99,5 mol-%, insbesondere 85 bis 99,5 mol-% von Propen abgeleitete Monomereinheiten und 0,5 bis 20 mol-%, insbesondere 0,5 bis 15 mol-% von Ethen und/oder einem $C_4$-$C_{12}$-1-Olefin abgeleitete Monomereinheiten, wobei die Summe der mol-% stets 100 ergibt. Mehr als 60 %, insbesondere mehr als 80 % aller Propen-Diaden in den besonders bevorzugten erfindungsgemäßen Polymeren des Propens liegen als isotaktische meso-Diaden vor.

Die Herstellung der in den erfindungsgemäßen Polymeren des Propens verwendeten Propencopolymere (A') sowie der Propenhomopolymere (B') oder der Propencopolymere (B') erfolgt vorzugsweise dadurch, daß man die jeweiligen Monomere in Anwesenheit eines Metallocen-Katalysatorsystems polymerisiert, welches

B) mindestens einen Metallocen-Komplex und

C) eine metalloceniumionenbildende Verbindung aufweist.

Vorzugsweise enthält das Metallocen-Katalysatorsystem noch

A) einen organischen oder einen anorganischen Träger.

Das bei der Herstellung der Propencopolymere (A'), der Propenhomopolymere (B') oder der Propencopolymere (B') verwendete Metallocen-Katalysatorsystem kann ferner neben den Katalysator-komponenten A), B) oder C) noch mindestens eine organische Metallverbindung eines Alkali- oder Erdalkalimetalls oder eines Metalls der III. Hauptgruppe des Periodensystems als Katalysatorkomponente D) enthalten.

Die Polymerisation zur Herstellung der Propencopolymere (A'), der Propenhomopolymere (B') oder der Propencopolymere (B') mit Hilfe derartiger Metallocen-Katalysatorsysteme wird bei Temperaturen im Bereich von -50 bis 300°C, vorzugsweise im Bereich von 0 bis 150°C, und bei Drücken im Bereich von 0,5 bis 3.000 bar, vorzugsweise im Bereich von 1 bis 100 bar, durchgeführt. Bei diesem Verfahren sollen die Verweilzeiten der jeweiligen Reaktionsgemische auf 0,5 bis 5 Stunden, insbesondere auf 0,7 bis 3,5 Stunden, eingestellt werden. Es können bei der Polymerisation u.a. auch Antistatika sowie Molmassenregler, beispielsweise Wasserstoff, mitverwendet werden.

Die Polymerisation kann in Lösung, in Suspension, in flüssigen Monomeren oder in der Gasphase durchgeführt werden. Bevorzugt erfolgt die Polymerisation in flüssigen Monomeren (Bulkverfahren) oder in der Gasphase, wobei die gerührte Gasphase bevorzugt ist.

Das ebenfalls erfindungsgemäße Verfahren kann sowohl kontinuierlich als auch diskontinuierlich durchgeführt werden. Geeignete Reaktoren sind u.a. kontinuierlich betriebene Rührkessel oder sogenannte loop-Reaktoren (Schleifenreaktoren), wobei man gegebenenfalls auch eine Reihe von mehreren hintereinander geschalteten Rührkesseln oder loop-Reaktoren verwenden kann (Reaktorkaskade) .

Die verwendeten Metallocen-Katalysatorsysteme können vorzugsweise einen anorganischen Träger als Katalysatorkomponente A) enthalten beispielsweise Magnesiumchlorid. Als anorganischer Träger kann dabei auch ein solches anorganisches Oxid verwendet werden, welches einen pH-Wert, ermittelt nach S.R. Morrison, "The Chemical Physics of Surfaces", Plenum Press, New York [1977], Seite 130ff, von 1 bis 6 und Hohlräume und Kanäle aufweist, deren makroskopischer Volumenanteil am Gesamtpartikel im Bereich von 5 bis 30 % liegt. Bevorzugt können dabei insbesondere solche anorganischen Oxide eingesetzt werden, deren pH-Wert, d.h. deren negativer dekadischer Logarithmus der Protonenkonzentration, im Bereich von 2 bis 5,5 zu finden ist.

Es werden als anorganische Träger insbesondere auch solche anorganischen Oxide verwendet, die einem mittleren Teilchendurchmesser von 5 bis 200 μm, insbesondere von 20 bis 90 μm, und einen mittleren Teilchendurchmesser der Primärpartikel von 1 bis 20 μm, insbesondere von 1 bis 5 μm, aufweisen. Bei den sogenannten Primärpartikeln handelt es sich dabei um poröse, granuläre Partikel. Die Primärpartikel weisen Poren mit einem Durchmesser von insbesondere 1 bis 1000 Å auf. Weiterhin sind die zu verwendenden anorganischen Oxide u.a. auch noch dadurch

charakterisiert, daß sie über Hohlräume und Kanäle mit einem mittleren Durchmesser von 0,1 bis 20 µm, insbesondere von 1 bis 15 µm, verfügen. Die anorganischen Oxide weisen ferner insbesondere noch ein Porenvolumen von 0,1 bis 10 $cm^3/g$, bevorzugt von 1,0 bis 5,0 $cm^3/g$, und eine spezifische Oberfläche von 10 bis 1000 $m^2/g$, bevorzugt von 100 bis 500 $m^2/g$, auf. Derartige feinteilige anorganische Oxide sind u.a. durch Sprühtrocknung von gemahlenen Hydrogelen erhältlich und können auch im Handel bezogen werden.

Bevorzugte anorganische Träger sind insbesondere Oxide des Siliciums, des Aluminiums, des Titans oder eines der Metalle der I. bzw. der II. Hauptgruppe des Periodensystems. Als ganz bevorzugtes anorganisches Oxid wird neben Aluminiumoxid oder Magnesiumoxid oder einem Schichtsilikat auch Kieselgel ($SiO_2$) verwendet.

Als Katalysatorkomponente A) können auch sogenannte Cogele, d.h. Gemische von mindestens zwei verschiedenen anorganischen Oxiden, eingesetzt werden.

Weiterhin kann die Katalysatorkomponente A) auch ein organischer Träger sein, beispielsweise ein thermoplastisches Polymer. Bevorzugte organische Träger sind dabei Polymere von Alk-1-enen, insbesondere Propenhomopolymere oder Propencopolymere, ferner Ethenhomopolymere oder Ethencopolymere.

Es werden vorzugsweise pro Gramm Träger, d.h. der Komponente A), 0,1 bis 10000 µmol, insbesondere 5 bis 200 µmol Metallocenkomplex, d.h. der Komponente B) eingesetzt.

Als Katalysatorkomponente B) enthält das verwendete Metallocen-Katalysatorsystem mindestens einen oder mehrere Metallocenkomplexe. Als Metallocenkomplexe eigenen sich besonders solche der allgemeinen Formel (I)

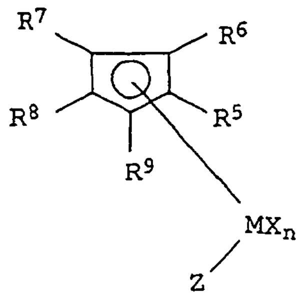

(I)

in der die Substituenten folgende Bedeutung haben:

M Titan, Zirkonium, Hafnium, Vanadium, Niob oder Tantal, sowie Elemente der III. Nebengruppe des Periodensystems und der Lanthanoiden,

X Fluor, Chlor, Brom, Iod, Wasserstoff, $C_1$- bis $C_{10}$-Alkyl, $C_6$- bis $C_{15}$-Aryl, Alkylaryl mit 1 bis 10 C-Atomen im Alkylrest und 6 bis 20 C-Atomen im Arylrest, $-OR^{10}$ oder $-NR^{10}R^{11}$,

n eine ganze Zahl zwischen 1 und 3, wobei n der Wertigkeit von M minus der Zahl 2 entspricht,

wobei

$R^{10}$ und $R^{11}$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,

$R^5$ bis $R^9$ . Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder $Si(R^{12})_3$ mit

$R^{12}$ $C_1$- bis $C_{10}$-Alkyl, $C_3$- bis $C_{10}$-Cycloalkyl oder $C_6$- bis $C_{15}$-Aryl,

Z für X oder

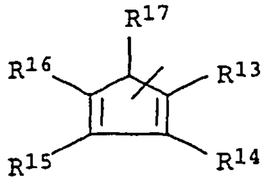

steht,

wobei die Reste

$R^{13}$ bis $R^{17}$ Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 25 C-Atome aufweisende gesättigte oder unge- sättigte cyclische Gruppen stehen können, oder Si $(R^{18})_3$ mit

$R^{18}$ $C_1$- bis $C_{10}$-Alkyl, $C_6$- bis $C_{15}$-Aryl oder $C_3$- bis $C_{10}$-Cycloalkyl,

oder wobei die Reste $R^8$ und Z gemeinsam eine Gruppierung $-R^{19}$-A-bilden, in der

$R^{19}$

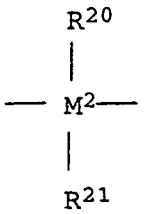 , 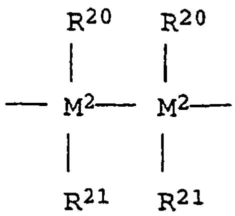 , 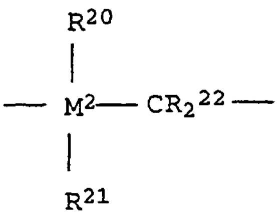 ,

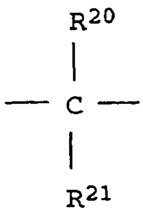 , 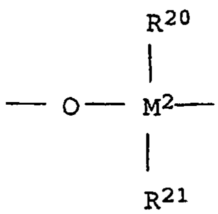 , 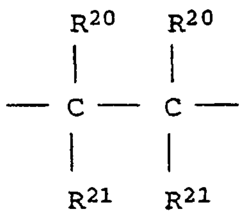 ,

= $BR^{20}$, = $AlR^{20}$, -Ge-, -Sn-, -O-, -S-, = SO, = $SO_2$, = $NR^{20}$, = CO, = $PR^{20}$ oder = $P(O)R^{20}$ ist,

wobei

$R^{20}$, $R^{21}$ und $R^{22}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen Ring bilden, und

$M^2$ Silicium, Germanium oder Zinn ist,

A —O—, —S—, 〉$NR^{23}$ oder 〉$PR^{23}$ bedeuten, mit

$R^{23}$ $C_1$- bis $C_{10}$-Alkyl, $C_6$- bis $C_{15}$-Aryl, $C_3$- bis $C_{10}$-Cycloalkyl, Alkylaryl oder $Si(R^{24})_3$,

$R^{24}$ Wasserstoff, $C_1$- bis $C_{10}$-Alkyl, $C_6$- bis $C_{15}$-Aryl, das seinerseits mit $C_1$- bis $C_4$-Alkylgruppen substituiert sein kann oder $C_3$- bis $C_{10}$-Cycloalkyl

oder wobei die Reste $R^8$ und $R^{16}$ gemeinsam eine Gruppierung $-R^{19}-$bilden.

Von den Metallocenkomplexen der allgemeinen Formel I sind

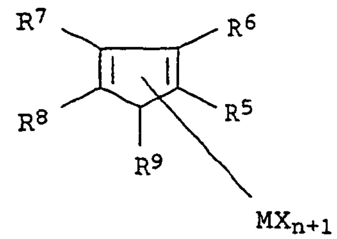

Ia,

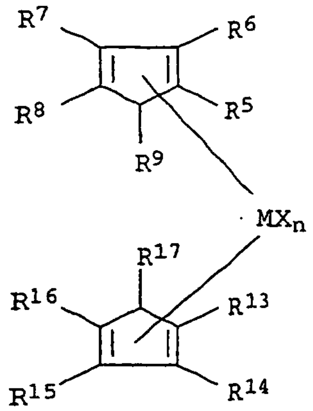

Ib,

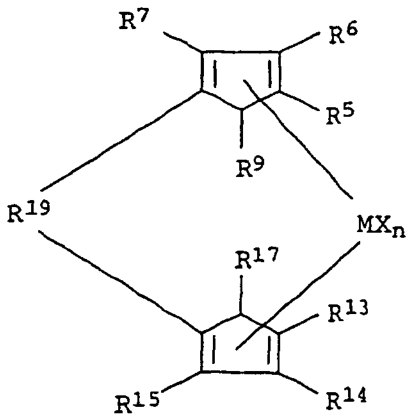

Ic

und

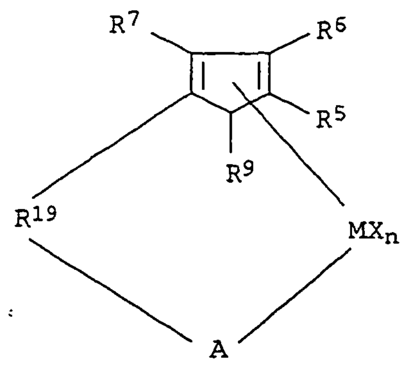

Id

bevorzugt.

Die Reste X können gleich oder verschieden sein, bevorzugt sind sie gleich.

Von den Verbindungen der Formel Ia sind insbesondere diejenigen bevorzugt, in denen

| | |
|---|---|
| M | Titan, Zirkonium oder Hafnium, |
| X | Chlor, $C_1$-bis $C_4$-Alkyl oder Phenyl, |
| n | die Zahl 2 und |
| $R^5$ bis $R^9$ | Wasserstoff oder $C_1$- bis $C_4$-Alkyl bedeuten. |

Von den Verbindungen der Formel Ib sind als bevorzugt diejenigen zu nennen, bei denen

| | |
|---|---|
| M | für Titan, Zirkonium oder Hafnium steht, |
| X | Chlor, $C_1$-bis $C_4$-Alkyl oder Phenyl, |
| n | die Zahl 2, |
| $R^5$ bis $R^9$ | Wasserstoff, $C_1$- bis $C_4$-Alkyl oder $Si(R^{12})_3$, |
| $R^{13}$ bis $R^{17}$ | Wasserstoff, $C_1$- bis $C_4$-Alkyl oder $Si(R^{18})_3$ bedeuten. |

Insbesondere sind die Verbindungen der Formel Ib geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)-zirkoniumdichlorid, Bis (methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen

| | |
|---|---|
| $R^5$ und $R^{13}$ | gleich sind und für Wasserstoff oder $C_1$- bis $C_{10}$-Alkylgruppen stehen, |
| $R^9$ und $R^{17}$ | gleich sind und für Wasserstoff, eine Methyl-, Ethyl-, iso-Propyl- oder tert.-Butylgruppe stehen, |
| $R^6$, $R^7$, $R^{14}$ und $R^{15}$ | die Bedeutung<br>$R^7$ und $R^{15}$ $C_1$- bis $C_4$-Alkyl<br>$R^6$ und $R^{14}$ Wasserstoff<br>haben oder zwei benachbarte Reste $R^6$ und $R^7$ sowie<br>$R^{19}$ und $R^{15}$ gemeinsam für 4 bis 25 C-Atome aufweisende cyclische Gruppen stehen, |
| $R^{19}$ | für |

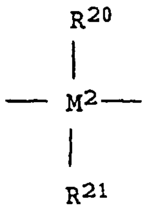

oder

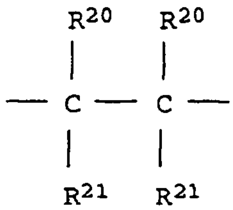

steht,

M für Titan, Zirkonium oder Hafnium und

X für Chlor, $C_1$- bis $C_4$-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis (-2-methylindenyl) -zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-ethylindenyl)-zirkoniumdichlorid,
Dimethylsilandiylbis (-2-methylbenzindenyl) -zirkoniumdichlorid
Dimethylsilandiylbis(2-ethylbenzindenyl)zirkoniurndichlorid,
Methylphenylsilandiylbis (2 -ethylbenzindenyl) zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Diphenylsilandiylbis(-2-methylindenyl)-hafniumdichlorid
sowie die entsprechenden Dimethylzirkoniumverbindungen.

Weitere Beispiele für geeignete Komplexverbindungen sind u.a.
Dimethylsilandiylbis (-2-methyl-4-phenylindenyl) zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid und
Dimethylsilandiylbis(-2-methyl-4,6-diisopropylindenyl)zirkoniumdichlorid sowie die entsprechenden Dimethylzirkoniumverbindungen.

Bei den Verbindungen der allgemeinen Formel Id sind als besonders geeignet diejenigen zu nennen, in denen

M für Titan oder Zirkonium,

X für Chlor, $C_1$-bis $C_4$-Alkyl oder Phenyl stehen.

$R^{19}$ für

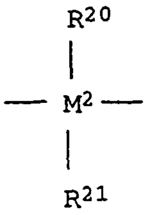

oder

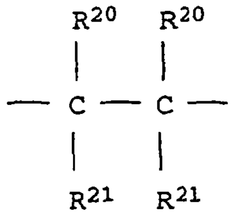

steht,

A für —O—, —S—, ⟩$NR^{23}$

und

$R^5$ bis $R^7$ und $R^9$ für Wasserstoff, $C_1$- bis $C_{10}$-Alkyl, $C_3$- bis $C_{10}$-Cycloalkyl, $C_6$- bis $C_{15}$-Aryl oder $Si(R^{12})_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Katalysatorkomponente C) enthält das einzusetzende Metallocen-Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

$$M^3X^1X^2X^3 \qquad II$$

bevorzugt, in der

$M^3$ ein Element der III. Hauptgruppe des Periodensystems bedeutet, insbesondere B, A1 oder Ga, vorzugsweise B,

$X^1$, $X^2$ und $X^3$ für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der $X^1$, $X^2$ und $X^3$ gleich sind, vorzugsweise Tris(pentafluorphenyl)boran.

Als ionische Verbindungen mit lewissauren Kationen sind Verbindungen der allgemeinen Formel III

$$[(Y^{a+})Q_1Q_2... Q_z]^{d+} \qquad III$$

geeignet, in denen

Y ein Element der I. bis VI. Hauptgruppe oder der I. bis VIII. Nebengruppe des Periodensystems bedeutet,

$Q_1$ bis $Q_z$ für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_3$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen

a für ganze Zahlen von 1 bis 6 und

z für ganze Zahlen von 0 bis 5 steht,

d der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO-A 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO-A 91/09882 genannt, bevorzugtes Kation ist das N,N-Dimethylanilinium.

Die Menge der verwendeten metalloceniumionenbildenden Verbindung C) beträgt bevorzugt 0,1 bis 10 Äquivalente, bezogen auf den Metallocenkomplex I.

Besonders geeignet als metalloceniumionenbildende Verbindung C) sind offenkettige oder cyclische Alumoxanverbindungen der allgemeinen Formel IV oder V

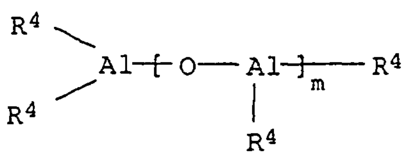

IV

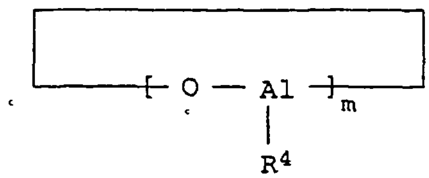

V

wobei

$R^4$ eine $C_1$- bis $C_4$-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente B) als auch die metalloceniumionenbildende Verbindung (Komponente C) in Lösung eingesetzt, wobei aromatische Kohlenwasserstoffe mit 6 bis 20 C-Atomen, insbesondere Xylole und Toluol, besonders bevorzugt sind.

Weiterhin können als Katalysatorkomponente C) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis $10^6$:1, insbesondere im Bereich von 10:1 bis $10^4$:1, liegt.

Das zur Herstellung der Propencopolymere (A') oder (B') oder des Propenhomopolymers (B') eingesetzte Metallocen-Katalysatorsystem kann als Katalysatorkomponente D) gegebenenfalls noch eine Metallverbindung der allgemeinen Formel VI

$$M^1(R^1)_r(R^2)_s(R^3)_t \qquad \text{VI}$$

in der

| | |
|---|---|
| $M^1$ | ein Alkali-, ein Erdalkalimetall oder ein Metall der III. Hauptgruppe des Periodensystems, d.h. Bor, Aluminium, Gallium, Indium oder Thallium bedeutet, |
| $R^1$ | Wasserstoff, $C_1$- bis $C_{10}$-Alkyl, $C_6$- bis $C_{15}$-Aryl, Alkylaryl oder Arylalkyl mit jeweils 1 bis 10 C-Atom im Alkylrest und 6 bis 20 C-Atomen im Arylrest, |
| $R^2$ und $R^3$ | Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest, |
| r | eine ganze Zahl von 1 bis 3 |

und

s und t ganze Zahlen von 0 bis 2 bedeuten, wobei die Summe r+s+t der Wertigkeit von $M^1$ entspricht,

enthalten.

Von den Metallverbindungen der allgemeinen Formel VI sind diejenigen bevorzugt, in denen

| | |
|---|---|
| $M^1$ | Lithium, Magnesium oder Aluminium bedeutet und |
| $R^1$ bis $R^3$ | für $C_1$- bis $C_{10}$-Alkyl stehen. |

Besonders bevorzugte Metallverbindungen der Formel VI sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Katalysatorkomponente D) eingesetzt wird, ist sie bevorzugt in einer Menge von 800:1 bis 1:1, insbesondere 500:1 bis 50:1 (molares Verhältnis von $M^1$ aus Formel VI zu Übergangsmetall M aus Formel I) im Katalysatorsystem enthalten.

Die Katalysatorkomponenten B) und C) und gegebenenfalls A) und D) werden zusammen als Metallocen-Katalysatorsystem verwendet.

Die Herstellung der erfindungsgemäßen Polymere des Propens kann nach mehreren, ebenfalls erfindungsgemäßen Verfahren durchgeführt werden. Nach einem dieser Verfahren werden die mit Hilfe des vorstehend beschriebenen Metallocen-Katalysatorsystems erhaltenen Propencopolymere (A') und (B') oder das Propenhomopolymere (B') nach ihrer getrennt erfolgten Herstellung bei Temperaturen von 150 bis 300°C, insbesondere bei 180 bis 280°C physikalisch miteinander vermischt. Dabei bilden sich die erfindungsgemäßen Polymere des Propens als Blend aus dem Propencopolymeren (A') und dem Propencopolymeren (B') bzw. dem Propenhomopolymeren (B').

Die physikalische Vermischung erfolgt in üblichen Vermischungsapparaturen, beispielsweise in Knetern, Brabender-Mischern, in Mühlen oder aber in Extrudern, die bevorzugt verwendet werden. Besonders vorteilhaft haben sich hierbei Doppelschneckenextruder erwiesen.

Nach einem anderen, ebenfalls erfindungsgemäßen Verfahren stellt man die Bestandteile der Polymere des Propens, die Propencopolymere (A') und (B') bzw. das Propenhomopolymere (B') in situ, d.h. zusammen in einem Reaktor mit Hilfe von cogeträgerten Metallocen-Katalysatoren her. Die Polymerisation wird dabei bei Temperaturen von -50 bis 300°C, insbesondere von 0 bis 150°C und Drücken von 0,5 bis 3000 bar, insbesondere von 1 bis 100 bar durchgeführt. Das verwendete Metallocen-Katalysatorsystem enthält neben einer metalloceniumionenbildenden Verbindung C) zwei verschiedene Metallocenkomplexe B) sowie gegebenenfalls noch einen Träger A) und gegebenenfalls eine organische Metallverbindung eines Alkali- oder Erdalkalimetalls oder eines Metalls der III. Hauptgruppe des Periodensystems als Katalysatorkomponente D).

Als Katalysatorkomponenten A), B), C) und D) können die gleichen Verbindungen verwendet werden, wie vorstehend bei der Herstellung der Propencopolymere (A') und (B') bzw. des Propenhomopolymers (B') beschrieben. Was die einzelnen Herstellbedingungen betrifft, so sei ebenfalls auf die vorstehende Beschreibung verwiesen.

Die erfindungsgemäßen Polymere des Propens zeichnen sich u.a. durch ein sehr günstiges Steifigkeits-Schlagzähigkeitsverhältnis, niedrige extrahierbare Anteile und eine hohe Transparenz aus, was durch Haze-Werte von weniger als 20 % deutlich wird. Sie eignen sich zur Herstellung von Folien, Fasern und Formkörper.

Die ebenfalls erfindungsgemäßen Herstellungsverfahren der Polymere des Propens sind wenig aufwendig und weisen eine hohe Produktivität auf.

Beispiele

Beispiel 1

Herstellung eines Metallocen-Trägerkatalysators

a) Herstellung des Trägermaterials
1000 g Kieselgel (SG 332, Teilchendurchmesser 50 µm, Fa. Grace; 8 Stunden bei 180°C im Vakuum (1 mbar) ausgeheizt) wurden in 5 1 Toluol unter $N_2$-Atmosphäre suspendiert. Bei einer Temperatur von 18°C wurden 7,75 1 (6,83 kg) 1,53 molare Methylaluminoxan(MAO)lösung (in Toluol, Fa. Witco) über 120 Minuten zugegeben. Danach wurde 7 Stunden lang bei Raumtemperatur nachgerührt, filtriert und der Filterkuchen zweimal mit je 2,5 l Toluol gewaschen. Anschließend wurde im Vakuum getrocknet.

b) Beladung mit dem Metallocenkomplex
1 kg des unter a) hergestellten MAO beladenen Kieselgels wurde in einem evakuierten Gefäß vorgelegt. Anschließend wurde unter Rühren eine Lösung von 5,8 g (10 mmol) rac.-Dimethylsilylenbis(2-methylbenzindenyl)zirkondichlorid in 1,32 1 1,53 molarer MAO-Lösung (Toluol) zugegeben. Nach dem Druckausgleich mit Stickstoff ($N_2$) wurde 30 Minuten bei Raumtemperatur durchmischt. Dann wurde, zunächst bei 20°C, die Hauptmenge Lösungsmittel im Vakuum abdestilliert (bis kein Lösungsmittel mehr überging). Anschließend wurde die Temperatur in 5°C Schritten auf 55°C erhöht und der Katalysator solange getrocknet, bis er als oranges, gut rieselfähiges Pulver zurückblieb.

Beispiel 2

Herstellung eines Propen/But-1-en-Copolymeren (A')im kontinuierlichen Gasphasenverfahren

Pro Stunde wurden 10 g des in Beispiel 1 hergestellten Metallocen-Trägerkatalysators in einen 200 1 Gasphasenreaktor dosiert. Propen und But-1-en wurden zugeführt und bei 24 bar Reaktordruck und 60°C Polymerisationstemperatur copolymerisiert, wobei pro Stunde 30 mmol Triisobutylaluminium zugefahren wurden (1 molare Lösung in Heptan). Die Polymerisation wurde über einen Zeitraum von 48 Stunden kontinuierlich betrieben. Man verwendete 97,4 mol-% Propen und 2,6 mol-% But-1-en. Der Reaktorausstoß betrug pro Stunde 20 kg. Es entstand ein Copolymergrieß. Die Charakterisierung des Copolymers ergab folgende Meßwerte: $T_m$ = 141,8°C, [η] = 2,26 dl/g, $M_n$ = 145 900 g/mol, $M_w$ = 266 400 g/mol, $M_w/M_n$ = 1,83, MFR = 3,8 g/10', $X_L$ = 0,19 Gew.-%, E-Modul: 1293 MPa; Buten-Gehalt: 0,6 mol-%, Anteil isotaktischer meso-Diaden, bezogen auf die Gesamtheit aller Propen-Diaden: 97,3 %.

Beispiel 3

Herstellung eines Propenhomopolymers (B') mit reduzierter Kristallinität

In einem trockenen, $N_2$ gespülten 10 1 Autoklaven wurden 26,1 ml 1,53 molare MAO-Lösung (40 mmol bez. auf Aluminium) und 3500 g flüssiges Propen vorgelegt. Anschließend wurden unter Rühren bei Raumtemperatur 46 mg rac.-Ethylen-bis(4,7-dimethyl-4,5,6,7-tetrahydroindenyl)zirkondichlorid, gelöst in 20 ml absolutiertem Toluol, über eine Schleuse mit $N_2$ eingeschossen. Der Autoklav auf 60°C aufgeheizt und es wurde 90 Minuten bei dieser Temperatur polymerisiert. Nach Ablauf der Reaktionszeit wurde die Polymerisation durch Ablassen des restlichen Propens abgebrochen und das Produkt bei 60°C über ein Bodenventil abgelassen. Es wurden 750 g Homopolymer erhalten, dessen Charakterisierung folgende Meßwerte ergab: $T_m$ = 148,3°C, $\Delta H_m$ = 11 J/g, [η] = 0,49 dl/g, $M_n$ = 27 500 g/mol, $M_w$ = 47 000 g/mol, $M_w/M_n$ = 1,70, $X_L$ = 0,96 Gew.-%, Anteil '1-3'-insertierter $C_3$-Einheiten: 14,4 mol-%, Tg: -30,4°C, Anteil isotaktischer meso-Diaden, bezogen auf die Gesamtheit aller regioregulären Propen-Diaden: 92,4 %, keine kristallinen Ex-Sequenzen nachweisbar.

Beispiel 4

Herstellung eines erfindungsgemäßen Polymers des Propens

4,95 kg des im Beispiel 2 erhaltenen Propencopolymeren und 0,05 kg des im Beispiel 3 erhaltenen Propenhomopolymeren wurden unter Zugabe von 600 ppm Irganox® 1010, 600 ppm Irgafos® 168, 300 ppm Ca-Stearat und 0,23 Gew-% Millad® 3988 (als Additive) auf einem Doppelschneckenextruder bei 230°C zu einem homogenen Blend

verarbeitet. Die erhaltenen Meßwerte sind in Tabelle 1 zusammengefaßt.

Bei Irganox® 1010 von Ciba-Geigy handelt es sich um Pentaerythrityltetrakis [3-(3,5-bis (1,1-dimethylethyl)-4-hydroxyphenol) propionat] und bei Irgafos® 168, ebenfalls von Ciba-Geigy, um Tris (2,4-bis-tert.butylphenol) phosphit. Millad® 3988 ist Dimethyldibenzylidensorbitol und wird von der Firma Milliken vertrieben.

Beispiel 5

Herstellung eines erfindungsgemäßen Polymeren des Propens

4,9 kg des im Beispiel 2 erhaltenen Propencopolymeren und 0,1 kg des im Beispiel 3 erhaltenen Propenhomopolymeren wurden unter Zugabe von 600 ppm Irganox 1010, 600 ppm Irgafos 168, 300 ppm Ca-Stearat und 0,23 Gew-% Millad 3988 auf einem Doppelschneckenextruder bei 230°C zu einem homogenen Blend verarbeitet. Die erhaltenen Meßwerte sind in Tabelle 1 zusammengefaßt.

Beispiel 6

Herstellung eines erfindungsgemäßen Polymeren des Propens

4,825 kg des im Beispiel 2 erhaltenen Propencopolymeren und 0,175 kg des im Beispiel 3 erhaltenen Propenhomopolymeren wurden unter Zugabe von 600 ppm Irganox 1010, 600 ppm Irgafos 168, 300 ppm Ca-Stearat und 0,23 Gew-% Millad 3988 auf einem Doppelschneckenextruder bei 230°C bar zu einem homogenen Blend verarbeitet. Die erhaltenen Meßwerte sind in Tabelle 1 zusammengefaßt.

Beispiel 7

Herstellung eines erfindungsgemäßen Polymeren des Propens

4,75 kg des im Beispiel 2 erhaltenen Propencopolymeren und 0,25 kg des im Beispiel 3 erhaltenen Propenhomopolymeren wurden unter Zugabe von 600 ppm Irganox 1010, 600 ppm Irgafos 168, 300 ppm Ca-Stearat und 0,23 Gew.-% Millad 3988 auf einem Doppelschneckenextruder bei 230°C zu einem homogenen Blend verarbeitet. Die erhaltenen Meßwerte sind in Tabelle 1 zusammengefaßt.

Vergleichsbeispiel A

5,0 kg eines Propencopolymeren (Novolen® 3240 NC von BASF) wurden wie in den Beispielen 4 bis 7 beschrieben mit 600 ppm Irganox 1010, 600 ppm Irgafos 168, 300 ppm Ca-Stearat und 0,23 Gew.-% Millad 3988 im Doppelschneckenextruder zu einem homogenen Blend verarbeitet. Novolen® 3240 NC ist ein Propencopolymer mit 2,5 Gew. -% (3,7 mol-%) einpolymerisiertem Ethen und einem MFR von 11 g/10 min., bei 230°C und 2,16 kg, nach ISO 1133, welches durch Gasphasenpolymerisation von Propen und Ethen mit Hilfe eines Ziegler-Natta-Katalysators, der u.a. in der US-A 5,288,824 beschrieben ist, erhalten worden ist. Die resultierenden Meßwerte sind in der nachfolgenden Tabelle 1 zusammengefaßt.

Vergleichsbeispiel B

5,0 kg eines Propencopolymeren (Novolen® 3248 TC von BASF) wurde wie im Vergleichsbeispiel A beschrieben mit den gleichen Mengen Irganox 1010, Irgafos 168, Ca-Stearat und Millad 3988 und nach analogem Verfahren verarbeitet. Novolen® 3248 TC ist ein Propencopolymer mit 2,5 Gew.-% (3,7 mol-%) einpolymerisiertem Ethen und einem MFR von 45 g/10 min., bei 230°C und 2,16 kg, nach ISO 1133, welches ebenfalls durch Gasphasenpolymerisation von Propen und Ethen mit Hilfe eines Ziegler-Natta-Katalysators, der u.a. in der US-A 5,288,824 beschrieben ist, erhalten worden ist. Die resultierenden Meßwerte sind in der nachfolgenden Tabelle 1 zusammengefaßt.

Beispiel 8

Herstellung eines erfindungsgemäßen Polymeren des Propens durch in situ Polymerisation mit zwei verschiedenen Metallocenkomplexen

a) Katalysatorherstellung

a1: MAO beladenes Kieselgel ($SiO_2$):
1000 g Kieselgel (SG 332, 50 μm, Fa. Grace; 8 Stunden bei 180°C im Vakuum (1 mbar) ausgeheizt) wurde in 5 1 Toluol unter $N_2$-Atmosphäre suspendiert. Bei einer Temperatur von 18°C wurden 7,75 1 (6,83 kg) 1,53 molare Methylaluminoxanlösung (in Toluol, Fa. Witco) über 120 Minuten zugegeben. Anschließend wurde 7 Stunden bei Raumtemperatur nachgerührt, filtriert und der Filterkuchen 2-mal mit je 2,5 Toluol gewaschen. Danach wurde die Trägervorstufe im Vakuum getrocknet.

a2: Beladung mit Metallocen:
10 g des unter a) hergestellten, mit MAO beladenen Kieselgels wurden in einem evakuierten Gefäß vorgelegt. Anschließend wurde unter Rühren eine Lösung von 52,2 mg (90 μmol) rac.-Dimethylsilylenbis(-2-methylbenzindenyl)zirkondichlorid und 4,6 mg (10 μmol) rac.-Ethylenbis(4,7-dimethyl-4,5,6,7-tetrahydroindenyl)zirkondichlorid in 13,2 ml 1,53 molarer MAO-Lösung (s.o.) und 36,8 ml absolutiertes Toluol zugegeben. Nach dem Druckausgleich mit $N_2$ wird 30 Minuten bei Raumtemperatur durchmischt. Dann wurde, zunächst bei 20°C, die Hauptmenge Lösungsmittel im Vakuum abdestilliert (bis kein Lösungsmittel mehr übergeht). Anschließend wurde die Temperatur langsam auf 55°C erhöht und der Katalysator solange im Vakuum getrocknet, bis er als oranges, gut rieselfähiges Pulver zurückblieb.

b) Polymerisationen
In einem trockenen, $N_2$ gespülten 10 1 Autoklaven wurden 20 mmol Triisobutylaluminium (TiBA; 10 ml einer 2-molaren Lösung in Heptan) vorgelegt. Nach Zugabe von 3500 g flüssigen Propens und ca. 50 g flüssigen 1-Butens wurden unter Rühren bei Raumtemperatur 945 mg Metallocen-Trägerkatalysator (Herstellung s.o.) über eine Schleuse mit $N_2$ eingeschlossen. Anschließend wurde der Autoklav auf 60°C aufgeheizt und 90 Minuten bei dieser Temperatur polymerisiert. Nach Ablauf der Reaktionszeit wurde die Polymerisation durch Ablassen des restlichen Propen/1-Buten-Gemisches abgebrochen und das Produkt über ein Bodenventil abgelassen. Es wurden 1850 g Polymergrieß erhalten (Produktivität: 1960 g Copolymer/g Katalysator.)
Das Beispiel 8 wurde noch zweimal wiederholt, einmal mit 930 mg Katalysator, wobei insgesamt 1820 g Copolymer resultierten (Produktivität: 1960 g Copolymer/g Katalysator) und noch einmal mit 945 mg Katalysator, wobei man 1740 g Copolymer erhielt (Produktivität: 1840 g Copolymer/g Katalysator.) Das Polymerisat der drei Polymerisationen wurde homogen vermischt, entsprechend dem Beispiel 4 mit Additiven versetzt, granuliert und getestet. Die erhaltenen Meßwerte sind in Tabelle 1 zusammengefaßt.

Die in den Beispielen aufgeführten Eigenschaften wurden folgendermaßen bestimmt.

| | |
|---|---|
| Comonomergehalt bzw. Anteil '1-3'-insertierter Propeneinheiten, sowie Anteil der Meso-Diaden: | über $^{13}C$-NMR |
| Schmelzpunkt ($T_M$): | mittels DSC (differential scanning calorimetry) |

Xylollösliche Anteile (XL):

In einen 1-Liter-Dreihalskolben mit Rührer, Rückflußkühler und Thermometer wurden 500 ml destilliertes Xylol (Isomerengemisch) eingefüllt und auf 100°C erhitzt. Bei dieser Temperatur wurde das Polymere eingefüllt, anschließend auf den Siedepunkt des Xylols erhitzt und 60 min am Rückfluß gehalten. Anschließend wurde die Wärmezufuhr abgebrochen, innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert und von dem Filtrat exakt 100 ml in einen vorher tarierten 250-ml-Einhalskolben gefüllt. Daraus wurde das Lösungsmittel am Rotationsverdampfer entfernt. Anschließend wurde der verbleibende Rückstand im Vakuumtrockenschrank bei 80°C/200 Torr 2 Stunden lang getrocknet. Nach dem Erkalten wurde ausgewogen.
Der xylollösliche Anteil ergibt sich aus

$$X_L = \frac{g \times 500 \times 100}{G \times V}$$

$X_L$ = xylollöslicher Anteil in %
g = gefundene Menge

G = Produkteinwaage
V = Volumen der eingesetzten Filtratmenge

| | |
|---|---|
| Molmasse (Zahlenmittel) $M_N$: | mittels Gelpermeationschromatographie |
| Molmasse (Gewichtsmittel) $M_w$: | mittels Gelpermeationschromatographie |
| Polymerdispersität $M_w$ / $M_N$: | mittels Gelpermeationschromatographie |
| Xylollöslicher Anteil Xc, DSC: | mittels DSC(aus $\Delta H_M$: $\Delta H_{M,100\%}$ = 209 J/g) 1) |
| Viskosität [η]: | mittels Viskosimetrie in Decalin bei 135°C |
| Schmelzflußindex (MFR) : | nach ISO 1133 |
| Zug E-Modul: | nach ISO 527 |
| Charpy Schlagzähigkeit: | nach ISO 179-2/1eU |
| Charpy Kerbschlagzähigkeit: | nach ISO 179-2/1eA |
| Trübung (Haze): | nach ASTM D 1003, Prüfung an 2 mm Rundscheiben |
| Glastemperatur (Tg): | mittels DSC 2) |
| Schmelzenthalpie ($\Delta H_M$): | mittels DSC 2) |

1) nach R.P. Quirk, M.A.A. Alsamarraie, "Physical Constants of Polypopylene, aus J. Brandrup, E.H. Immergut (EDS.) "Polymer Handbook", J.Wiley & Sons, New York, 1989
2) Aufheizrate 20°C/min., zuvor aus der Schmelze (210°C) mit 10°C/min abgekühlt.

Tabelle 1:

| | | Beispiel 4 | Beispiel 5 | Beispiel 6 | Beispiel 7 | Vergleichsbeispiel A | Vergleichsbeispiel B | Beispiel 8 |
|---|---|---|---|---|---|---|---|---|
| MFR (230°C/2,16 kg; n. ISO 1133) | g/10' | 4,5 | 4,6 | 4,8 | 5,1 | 10,7 | 42,3 | - |
| $M_n$: | g/mol | 145600 | 128300 | 133100 | 117400 | - | - | 153800 |
| $M_w$: | g/mol | 265500 | 258200 | 266000 | 257500 | - | - | 296300 |
| $M_w/M_n$: | | 1,8 | 2,0 | 2,0 | 2,2 | - | - | 1,93 |
| $T_m$: | °C | 142,3 | 142,3 | 142,4 | 142,3 | 147,9 | 148,6 | 143,6 |
| $\Delta H_m$: | J/g | 87,6 | 87,2 | 85,6 | 85,5 | 87,5 | 90,5 | 92,0 |
| $x_{c,DSC}$: | % | 41,9 | 41,7 | 41,0 | 40,9 | 41,9 | 43,3 | 44,0 |
| $X_L$: | w-% | 1,5 | 2,4 | 3,6 | 4,8 | 5,2 | 5,5 | 2,2 |
| E-Modul (n. ISO 527): | MPa | 1326 | 1277 | 1212 | 1173 | 1030 | 1134 | 1179 |
| Charpy Schlagzähigkeit: +23°C | $kJ/m^2$ | 200 | 220 | 228 | 236 | - | 168 | - |
| (instrumentiert) 0°C | $kJ/m^2$ | 80 | 85 | 96 | 115 | 144 | 74 | 101 |
| (ISO 179-2/1eU) -20°C | $kJ/m^2$ | 16 | 16 | 16 | 17 | 20 | 16 | 16 |
| Charpy Kerbschlagzähigkeit: +23°C | $kJ/m^2$ | 4,0 | 4,4 | 4,9 | 5,3 | 6,4 | 4,1 | 5 |
| (instrumentiert) 0°C | $kJ/m^2$ | 1,2 | 1,4 | 1,5 | 1,5 | 1,8 | 1,2 | 2 |
| (ISO 179-2/1eA) -20°C | $kJ/m^2$ | 1,0 | 0,9 | 0,9 | 0,9 | 0,9 | 1.0 | 1 |
| Haze (ASTM D 1003): | % | 14[1)] | 16[1)] | 17[1)] | 17[1)] | 6[3)] | 6[3)] | 16[1)] |
| Anteil isotaktischer ineso-Diaden[2)] | % | >80 | >80 | >80 | >80 | - | - | >80 |

1) Prüfung an 2 mm Rundscheiben
2) bezogen auf alle Propen-Diaden
3) Prüfung an 1 mm Rundscheiben

Aus der vorliegenden Tabelle geht u.a. hervor, daß die erfindungsgemäßen Polymere des Propens (Beispiel 4 bis 8) gegenüber den aus dem Stand der Technik bekannten Polymeren (Vergleichsbeispiel A und B) über ein besseres Steifigkeits-Schlagzähigkeits-Verhältnis verfügen, sehr niedrige xylallösliche Anteile aufweisen und noch eine ausreichend gute Transparenz (Trübung) besitzen.

**Patentansprüche**

1. Polymere des Propens, bestehend aus 50 bis 99,9 Gew.-% eines isotaktischen Propencopolymeren (A') und aus 0,1 bis 50 Gew.-% eines Propenhomopolymeren oder eines Propencopolymeren (B'), wobei

   a) das Propencopolymere (A') aus 80 bis 99,5 mol-% Propen und aus 0,5 bis 20 mol-% Ethen und/oder einem $C_4$-$C_{12}$-1-olefin besteht, mindestens 80 % aller Propen-Diaden isotaktische meso-Diaden sind, das Propencopolymere (A') ferner bei 20°C xylollösliche Anteile in einer solchen Menge ($X_L$) aufweist, daß diese die Ungleichung (1)

$$(X_L) < 542\ 400 \exp(-0{,}1\ T_M) + 0{,}5 \qquad (1)$$

   erfüllt, der Zug E-Modul (E) der Propencopolymere (A') in MPa, bestimmt nach ISO 527, der Ungleichung (2)

$$(E) > 1{,}9 \times 10^{-11}\ (T_M)^{6.34} + 180\ \text{MPa} \qquad (2)$$

   entspricht, wobei in beiden Ungleichungen (1) und (2) $T_M$ für den Schmelzpunkt in °C steht und wobei
   b) das Propenhomopolymere oder das Propencopolymere (B') aus 80 bis 100 mol-% Propen und aus 0 bis 20 mol-% Ethen und/oder aus einem $C_4$-$C_{12}$-1-olefin besteht, mindestens 55 % aller regioregulären Propen-Diaden als isotaktische meso-Diaden vorliegen, bei der DSC-Messung von (B') eine Schmelzenthalpie $\Delta H_m$ von weniger als 50 J/g beobachtet wird und keine kristallinen $E_x$-Sequenzen nachweisbar sind, wobei $E_x$-Sequenzen kristallisationsfähige Sequenzen aus mehreren direkt aufeinander folgenden Etheneinheiten sind.

2. Polymere des Propens nach Anspruch 1, wobei das isotaktische. Propylencopolymere (A') aus 90 bis 99,5 mol-% Propen, wobei mindestens 80 % aller Propen-Diaden isotaktische meso-Diaden sind und aus 0,5 bis 10 mol-% Ethen und/oder einem $C_4$-$C_{12}$-1-Olefin besteht.

3. Polymere des Propens nach Anspruch 1 oder 2, wobei die Komponente (B') ein Propenhomopolymer ist.

4. Polymere des Propens nach den Ansprüchen 1 oder 2, wobei die Komponente (B') ein Propencopolymer aus 80 bis 99,99 mol-% Propen und aus 0,01 bis 20 mol-% Ethen und/oder aus einem $C_4$-$C_{12}$-1-Olefin besteht.

5. Polymere des Propens nach den Ansprüchen 1 bis 4, wobei in der Komponente (B') der Anteil regioirregulärer '1-3'-insertierter Propeneinheiten bei mindestens 4 %, bezogen auf alle Propeneinheiten liegt.

6. Polymere des Propens nach den Ansprüchen 1 bis 5, wobei die Komponente (B') eine Glasübergangstemperatur (Tg), ermittelt durch DSC-Messung, von weniger als -10°C aufweist.

7. Polymere des Propens nach den Ansprüchen 1 bis 6, wobei die Polymere des Propens aus Propencopolymer (A') und Komponente (B') aus 80 bis 99,5 mol-% Propen und aus 0,5 bis 20 mol-% Ethen und/oder aus einem $C_4$-$C_{12}$-1-Olefin bestehen, mindestens 60 % aller Propen-Diaden als isotaktische meso-Diaden vorliegen und einen solchen Zug-E-Modul (E) in MPa, bestimmt nach ISO 527 aufweisen, welcher der Ungleichung (2')

$$(E) > 0{,}02093\ (X)^2 - 8{,}762\ (X) + 1780\ \text{MPa} \qquad (2')$$

   gehorcht, wobei X für die Charpy-Schlagzähigkeit nach ISO 179-2/1 eU, bei 0°C steht und bei 20°C xylollösliche

Anteile von weniger als 5 Gew.-% besitzen.

**8.** Polymere des Propens nach Anspruch 7, wobei diese einen zug-E-Modul (E), bestimmt nach ISO 527, von mehr als 1150 MPa aufweisen.

**9.** Verfahren zur Herstellung der Polymere des Propens gemäß den Ansprüchen 1 bis 8, **dadurch gekennzeichnet, daß** man das Propencopolymere (A') und das Propenhomopolymere oder das Propencopolymere (B') nach ihrer jeweils getrennten Herstellung bei Temperaturen von 150 bis 300°C physikalisch miteinander vermischt.

**10.** Verfahren nach Anspruch 9, **dadurch gekennzeichnet, daß** man die physikalische Vermischung in einem Extruder vornimmt.

**11.** Verfahren zur Herstellung der Polymere des Propens gemäß den Ansprüchen 1 bis 8, **dadurch gekennzeichnet, daß** man das Propencopolymere (A') und das Propenhomopolymere oder das Propencopolymere (B') gemeinsam durch Polymerisation der Monomere bei Temperaturen von -50 bis 300°C und Drücken von 0,5 bis 3000 bar in Anwesenheit eines Metallocen-Katalysatorsystems herstellt, wobei das Metallocen-Katalysatorsystem neben einer metalloceniumionenbildenden Verbindung (C) zwei verschiedene Metallocenkomplexe (B) aufweist.

**12.** Verfahren nach Anspruch 11, **dadurch gekennzeichnet, daß** das verwendete Metallocen-Katalysatorsystem noch einen organischen oder einen anorganischen Träger (A) aufweist.

**13.** Verwendung der Polymere des Propens gemäß den Ansprüchen 1 bis 8 zur Herstellung von Folien, Fasern oder Formkörper.

**14.** Folien, Fasern oder Formkörper, erhältlich aus den Polymeren des Propens gemäß den Ansprüchen 1 bis 8 als wesentliche Komponente.

## Claims

**1.** A polymer of propene consisting of from 50 to 99.9 % by weight of an isotactic propene copolymer (A') and from 0.1 to 50 % by weight of a propene homopolymer or a propene copolymer (B'), wherein

a) the propene copolymer (A') consists of from 80 to 99.5 mol% of propene and from 0.5 to 20 mol% of ethene and/or a $C_4$-$C_{12}$-1-olefin, at least 80 % of all propene diads are isotactic meso diads, the propene copolymer (A') has a proportion ($X_s$) of material soluble in xylene at 20°C which satisfies the inequality (1)

$$(X_S) < 542\,400 \exp(-0.1\, T_M) + 0.5 \qquad (1),$$

the tensile modulus of elasticity (E) of the propene copolymer (A') in MPa, determined in accordance with ISO 527, obeys the inequality (2)

$$(E) > 1.9 \times 10^{-11}\, (T_M)^{6.34} + 180 \text{ MPa} \qquad (2),$$

where in both inequalities (1) and (2) $T_M$ is the melting point in °C, and wherein
b) the propene homopolymer or the propene copolymer (B') consists of from 80 to 100 mol% of propene and from 0 to 20 mol% of ethene and/or a $C_4$-$C_{12}$-1-olefin, at least 55 % of all regioregular propene diads are isotactic meso diads, an enthalpy of fusion $\Delta H_m$ of less than 50 J/g is observed in the DSC measurement of (B') and no crystalline $E_x$ sequences are detectable, where $E_x$ sequences are crystallizable sequences from several directly successive ethene units.

**2.** The polymer of propene according to claim 1, wherein the isotactic propylene copolymer (A') consists of from 90 to 99.5 mol% of propene, where at least 80 % of all propene diads are isotactic meso diads, and from 0.5 to 10 mol%

of ethene and/or a $C_4$-$C_{12}$-1-olefin.

**3.** The polymer of propene according to claim 1 or 2, wherein the component (B') is a propene homopolymer.

**4.** The polymer of propene according to claim 1 or 2, wherein the component (B') is a propene copolymer consisting of from 80 to 99.99 mol% of propene and from 0.01 to 20 mol% of ethene and/or a $C_4$-$C_{12}$-1-olefin.

**5.** The polymer of propene according to any one of claims 1 to 4, wherein the proportion of regioirregular '1-3'-inserted propene units in the component (B') is at least 4 %, based on all propene units.

**6.** The polymer of propene according to any one of claims 1 to 5, wherein the component (B') has a glass transition temperature determined by DSC measurement (Tg) of less than -10°C.

**7.** The polymer of propene according to any one of claims 1 to 6, wherein the polymers of propene consisting of propene copolymer (A') and component (B') consist of from 80 to 99.5 mol% of propene and from 0.5 to 20 mol% of ethene and/or a $C_4$-$C_{12}$-1-olefin, at least 60 % of all propene diads being isotactic meso diads, and said polymers present a tensile modulus of elasticity (E) in MPa, determined in accordance with ISO 527, which obeys the inequality (2')

$$(E) > 0.02093\ (X)^2 - 8.762\ (X) + 1780\ \text{MPa} \qquad (2'),$$

where X is the Charpy impact strength at 0°C in accordance with ISO 179-2/1 eU, and said polymers have a proportion of material which is soluble in xylene at 20°C of less than 5 % by weight.

**8.** The polymer of propene according to claim 7, wherein this has a tensile modulus of elasticity (E), determined in accordance with ISO 527, of more than 1150 MPa.

**9.** The process for preparing a polymer of propene according to any one of claims 1 to 8, **characterized in that** the process comprises physically mixing the propene copolymer (A') and the propene homopolymer or the propene copolymer (B') with one another at from 150 to 300°C after they have each been prepared separately.

**10.** The process according to claim 9, wherein the physical mixing is carried out in an extruder.

**11.** The process for preparing a polymer of propene according to any one of claims 1 to 8, **characterized in that** the process comprises jointly preparing the propene copolymer (A') and the propene homopolymer or the propene copolymer (B') by polymerization of the monomers at temperatures from -50 to 300°C and pressures of from 0.5 to 3000 bar in the presence of a metallocene catalyst system comprising, in addition to a compound (C) capable of forming metallocenium ions, two different metallocene complexes (B).

**12.** The process according to claim 11, **characterized in that** the metallocene catalyst system used further comprises an organic or inorganic support (A).

**13.** The use of a polymer of propene according to any one of claims 1 to 8 for producing films, fibers or moldings.

**14.** A film, fiber or molding obtainable from a polymer of propene according to any one of claims 1 to 8 as essential component.

## Revendications

**1.** Polymères de propène, constitués de 50 à 99,9 % en poids d'un copolymère de propène isotactique (A') et de 0,1 à 50 % en poids d'un homopolymère de propène ou d'un copolymère de propène (B'), dans lesquels

a) le copolymère de propène (A') est constitué de 80 à 99,5 % en moles de propène et de 0,5 à 20 % en moles d'éthène et/ou d'une 1-oléfine en $C_4$-$C_{12}$, au moins 80 % de tous les diades de propène sont des mésodiades isotactiques, le copolymère de propène (A') présente en plus des fractions solubles dans le xylène à 20°C en une quantité ($X_L$) satisfaisant à l'inégalité (1) :

$$(X_L) < 542\ 400 \exp(-0{,}1\ T_M) + 0{,}5 \qquad (1)$$

le module de traction (E) des copolymères de propène (A') en MPa, déterminé d'après la norme ISO 527, répond à l'inégalité (2) :

$$(E) > 1{,}9 \times 10^{-11}\ (T_M)^{6{,}34} + 180\ \text{MPa} \qquad (2)$$

$T_M$ représentant dans les deux inégalités (1) et (2) le point de fusion en °C, et dans lesquels
b) l'homopolymère de propène ou le copolymère de propène (B') est constitué de 80 à 100 % en moles de propène et de 0 à 20 % en moles d'éthène et/ou d'une 1-oléfine en $C_4$-$C_{12}$, au moins 55 % de tous les diades de propène régioréguliers se présentent sous forme de mésodiades isotactiques, une enthalpie de fusion $\Delta H_m$ de moins de 50 J/g est observée lors de la mesure DSC de (B') et aucune séquence cristalline $E_x$ n'est détectable, les séquences $E_x$ étant des séquences susceptibles de cristallisation constituées de plusieurs unités d'éthène directement successifs.

**2.** Polymères de propène selon la revendication 1, dans lesquels le copolymère de propylène isotactique (A') est constitué de 90 à 99,5 % en moles de propène, au moins 80 % de tous les diades de propène étant des mésodiades isotactiques, et de 0,5 à 10 % en moles d'éthène et/ou d'une 1-oléfine en $C_4$-$C_{12}$.

**3.** Polymères de propène selon la revendication 1 ou 2, dans lesquels le composant (B') est un homopolymère de propène.

**4.** Polymères de propène selon les revendications 1 ou 2, dans lesquels le composant (B') est un copolymère de propène constitué de 80 à 99,99 % en moles de propène et de 0,01 à 20 % en moles d'éthène et/ou d'une 1-oléfine en $C_4$-$C_{12}$.

**5.** Polymères de propène selon les revendications 1 à 4, dans lesquels, dans le composant (B'), la proportion de unités de propène insérés en '1-3' régioréguliers est au moins de 4 %, par rapport à tous les unités de propène.

**6.** Polymères de propène selon les revendications 1 à 5, dans lesquels le composant (B') présente une température de transition vitreuse (Tg), déterminée par DSC, de moins de -10°C.

**7.** Polymères de propène selon les revendications 1 à 6, dans lesquels les polymères de propène constitués du copolymère de propène (A') et du composant (B') se composent de 80 à 99,5 % en moles de propène et de 0,5 à 20 % en moles d'éthène et/ou d'une 1-oléfine en $C_4$-$C_{12}$, au moins 60 % de tous les diades de propène se présentent sous forme de mésodiades isotactiques, et les dites polymères présentent un module de traction (E) en MPa, déterminé d'après la norme ISO 527, qui répond à l'inégalité (2') :

$$(E) > 0{,}02093\ (X)^2 - 8{,}762\ (X) + 1780\ \text{MPa} \qquad (2')$$

dans laquelle X représente la résistance au choc Charpy d'après la norme ISO 179-2/1 eU, à 0°C, et possèdent des fractions solubles dans le xylène à 20°C inférieures à 5 % en poids.

**8.** Polymères de propène selon la revendication 7, présentant un module de traction (E) déterminé d'après la norme ISO 527, de plus de 1150 MPa.

**9.** Procédé de fabrication des polymères de propène selon les revendications 1 à 8, **caractérisé en ce que** l'on mélange physiquement le copolymère de propène (A') et l'homopolymère de propène ou le copolymère de propène (B') à des températures de 150 à 300°C, après leur fabrication respectivement séparée.

**10.** Procédé selon la revendication 9, **caractérisé en ce que** l'on opère le mélange physique dans une extrudeuse.

**11.** Procédé de fabrication des polymères de propène selon les revendications 1 à 8, **caractérisé en ce que** l'on fabrique le copolymère de propène (A') et l'homopolymère de propène ou le copolymère de propène (B') ensemble par polymérisation des monomères à des températures de -50 à 300°C et à des pressions de 0,5 à 3000 bars en présence d'un système catalytique métallocène, dans lequel le système catalytique métallocène présente, en plus d'un composant formant des ions métallocénium (C), deux complexes métallocène différents (B).

**12.** Procédé selon la revendication 11, **caractérisé en ce que** le système catalytique métallocène utilisé présente de plus un support organique ou inorganique (A).

**13.** Utilisation des polymères de propène selon les revendications 1 à 8 pour la fabrication de feuilles, de fibres ou de corps moulés.

**14.** Feuilles, fibres ou corps moulés, pouvant être obtenus à partir des polymères de propène selon les revendications 1 à 8 en tant que composant essentiel.